# EUROPEAN PATENT APPLICATION

(11) **EP 4 759 523 A1**
(43) Date of publication of application: **17.06.2026**
(21) Application number: 25783081.0
(22) Date of filing: 31.03.2025
(51) Int. Cl.: B29C 65/78, B29C 65/00, B29C 65/02, B29D 99/00, H01M 50/183

(54) **APPARATUS FOR SEALING POUCH BATTERY CELL WITH EASY POSITION ALIGNMENT AND METHOD FOR SEALING POUCH BATTERY CELL USING SAME**

(30) Priority: 02.04.2024 KR 20240044455; 21.10.2024 KR 20240143639
(71) Applicant: LG Energy Solution, Ltd., Seoul 07335 (KR)
(72) Inventor: KWON, Myung Bin, Daejeon 34122 (KR)
(74) Representative: Plasseraud IP
(86) International application number: PCT/KR2025/095138
(87) International publication number: WO 2025/211905

(57) **Abstract**

Disclosed are a pouch battery cell sealing apparatus with easy position alignment and a pouch battery cell sealing method using the same, and more particularly a pouch battery cell sealing apparatus including a seating jig configured to receive a pouch battery cell having an electrode lead and an insulating film located in a sealed portion of a pouch case seated thereon, a punching portion configured to form a guide hole in each of the sealed portion, the electrode lead, and the insulating film, and a pair of sealing tools configured to seal the sealed portion, wherein the sealing tool has a guide protrusion on a surface thereof configured to face the sealed portion of the pouch case, and a pouch battery cell sealing method using the same.

## Description

### [Technical Field]

This application claims the benefit of priority to Korean Patent Application No. 2024-0044455 filed on April 2, 2024 and Korean Patent Application No. 2024-0143639 filed on October 21, 2024, the disclosure of which is incorporated herein by reference in its entirety.

The present invention relates to a pouch battery cell sealing apparatus with easy position alignment and a pouch battery cell sealing method using the same, and more particularly to a pouch battery cell sealing apparatus with easy position alignment capable of preventing incorrect positioning for sealing, such as deviation of an electrode lead and an insulating film located in a sealed portion of a pouch battery cell from fixed positions during sealing, and a pouch battery cell sealing method using the same.

### [Background Art]

With recent development of alternative energies due to air pollution and energy depletion caused as the result of use of fossil fuels, demand for secondary batteries capable of storing electrical energy that is produced has increased.

Required capacities of secondary batteries used as energy sources of various kinds of electronic devices inevitably used in modern society have been increased due to an increase in usage of mobile devices, increasing complexity of the mobile devices, and development of electric vehicles. In order to satisfy demand of users, a plurality of battery cells is disposed in a small-sized device, whereas a battery module including a plurality of battery cells electrically connected to each other or a battery pack including a plurality of battery modules is used in a vehicle, etc.

Meanwhile, in a pouch battery cell manufacturing process, an electrode assembly is received in a pouch case, an electrolyte solution is injected into the pouch case, and the edge of the pouch case is heated and pressed to form a sealed portion. At this time, an electrode lead having one side connected to an electrode tab of the electrode assembly and the other side protruding outwardly of the pouch case and an insulating film located between the sealed portion and the electrode lead may be located in the sealed portion.

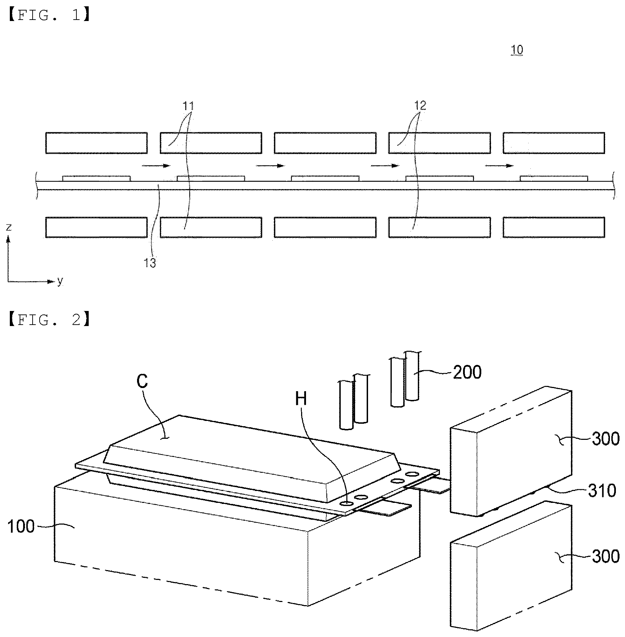

FIG. 1 is a side view showing a conventional battery case sealing apparatus. As shown in FIG. 1, the conventional battery case sealing apparatus 10 includes a primary sealing unit 11 and a secondary sealing unit 12 configured to perform sealing using pressure and temperature and a conveying unit 13 configured to convey a battery case.

The primary sealing unit 11 and the secondary sealing unit 12 apply pressure and temperature to the edge of the battery case conveyed by the conveying unit 13 to form a sealed portion.

At this time, an electrode lead configured to electrically connect the electrode assembly to an external device and an insulating film configured to maintain insulation between the battery case and the electrode lead may be located in the sealed portion.

The electrode lead and the insulating film may be at fixed positions when placed in the sealed portion, but may be displaced during a sealing process, which may result in incorrect positioning for sealing.

### (Prior Art Document)

(Patent Document 1) Korean Patent Application Publication No. 2023-0094176

### [Disclosure]

### [Technical Problem]

The present invention has been made in view of the above problems, and it is an object of the present invention to provide a pouch battery cell sealing apparatus with easy position alignment capable of aligning the positions of an electrode lead and an insulating film located in a sealed portion at the time of sealing a pouch case and performing sealing in the state in which the electrode lead and the insulating film are fixed at the aligned positions, thereby preventing incorrect positioning for sealing, and a pouch battery cell sealing method using the same.

### [Technical Solution]

A pouch battery cell sealing apparatus according to the present invention to accomplish the above object includes a seating jig (100) configured to receive a pouch battery cell (C) having an electrode lead and an insulating film located in a sealed portion of a pouch case seated thereon, a punching portion (200) configured to form a guide hole (H) in each of the sealed portion, the electrode lead, and the insulating film, and a pair of sealing tools (300) configured to seal the sealed portion, wherein the sealing tool (300) has a guide protrusion (310) on a surface thereof configured to face the sealed portion of the pouch case.

Also, in the pouch battery cell sealing apparatus according to the present invention, the guide hole (H) formed by the punching portion (200) may be provided in two or more.

Also, in the pouch battery cell sealing apparatus according to the present invention, each of the guide holes (H) formed in the sealed portion, the electrode lead, and the insulating film may be formed at the same position on a vertical extension line.

Also, in the pouch battery cell sealing apparatus according to the present invention, the guide protrusion (310) may be formed at the position corresponding to the guide hole (H).

Also, in the pouch battery cell sealing apparatus according to the present invention, a number of the guide protrusions (310) may be the same as a number of the guide holes (H).

Also, in the pouch battery cell sealing apparatus according to the present invention, the guide protrusion (310) may be identical in a horizontal sectional shape to the guide hole (H).

Also, in the pouch battery cell sealing apparatus according to the present invention, the guide protrusion (310) may be shaped so as to have a gradually decreasing unit area in a direction toward the guide hole (H).

Also, in the pouch battery cell sealing apparatus according to the present invention, the sealing tool (300) may have a receiving portion (320) configured to receive the guide protrusion (310) therein, and the receiving portion (320)may have an elastic member (330) having elasticity.

Also, in the pouch battery cell sealing apparatus according to the present invention, the elastic member (330) may be a spring.

Also, in the pouch battery cell sealing apparatus according to the present invention, the height of the guide protrusion (310) may be no more than and at least half the sum of heights of the guide holes (H) formed in the sealed portion, the electrode lead, and the insulating film.

In addition, a pouch battery cell sealing method according to the present invention includes forming a guide hole in each of a sealed portion, an electrode lead, and an insulating film of a pouch battery cell and sealing the sealed portion using a pair of sealing tools, wherein, during the step of sealing the sealed portion using the pair of sealing tools, a guide protrusion formed on each of the sealing tools is inserted into the guide hole.

Also, the pouch battery cell sealing method according to the present invention may further include adjusting the position of each of the sealing tools such that the guide protrusion is located at the same position on a vertical extension line as the guide hole before the step of sealing the sealed portion using the pair of sealing tools.

In addition, a pouch battery cell according to the present invention includes an electrode assembly, a pouch case having the electrode assembly received therein, the pouch case having a sealed portion extending from an edge thereof by a certain length, an electrode lead having one side connected to an electrode tab of the electrode assembly and the other side protruding outward from the pouch case, and an insulating film located between the sealed portion and the electrode lead, wherein a guide hole (H) is formed in each of the sealed portion, the electrode lead, and the insulating film.

Also, in the pouch battery cell according to the present invention, each of the guide holes (H) formed in the sealed portion, the electrode lead, and the insulating film may be formed at the same position on a vertical extension line.

Also, in the pouch battery cell according to the present invention, the guide hole (H) may be provided in two or more.

### [Advantageous Effects]

As is apparent from the above description, a pouch battery cell sealing apparatus with easy position alignment according to the present invention and a pouch battery cell sealing method using the same have the advantage that a guide protrusion is formed on a sealing tool, and the guide protrusion is inserted into a guide hole formed in a sealed portion when the sealing tool comes into tight contact with the sealed portion, whereby the sealed portion, an electrode lead, and an insulating film are aligned at fixed positions.

In addition, the pouch battery cell sealing apparatus according to the present invention and the pouch battery cell sealing method using the same have the advantage that an elastic member connected to the guide protrusion is provided, whereby it is possible to prevent damage to the guide protrusion due to tight contact between the sealing tools.

### [Description of Drawings]

FIG. 1 is a side view showing a conventional battery case sealing apparatus.
FIG. 2 is a perspective view showing a pouch battery cell sealing apparatus according to a first preferred embodiment of the present invention.
FIG. 3 is a perspective view showing a part of a sealing tool in the pouch battery cell sealing apparatus according to the first preferred embodiment of the present invention.
FIG. 4 is a sectional view showing the sealing tool in the pouch battery cell sealing apparatus according to the first preferred embodiment of the present invention.
FIG. 5 is a sectional view showing a sealing tool in a pouch battery cell sealing apparatus according to a second preferred embodiment of the present invention.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

Hereinafter, a pouch battery cell sealing apparatus with easy position alignment according to the present invention and a pouch battery cell sealing method using the same will be described with reference to the accompanying drawings.

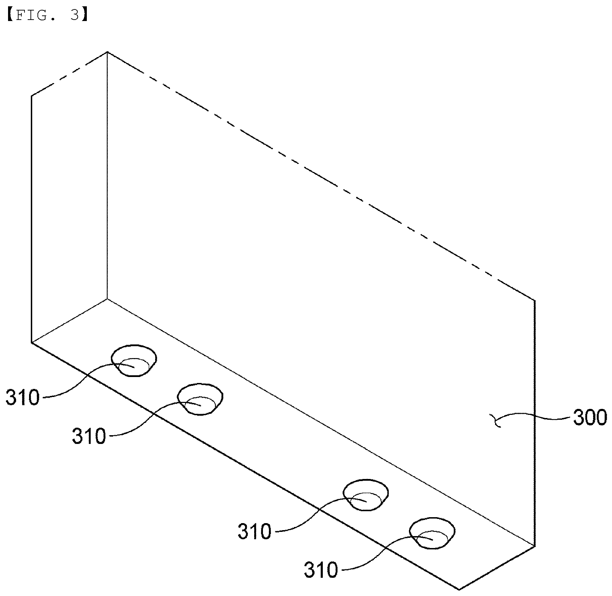

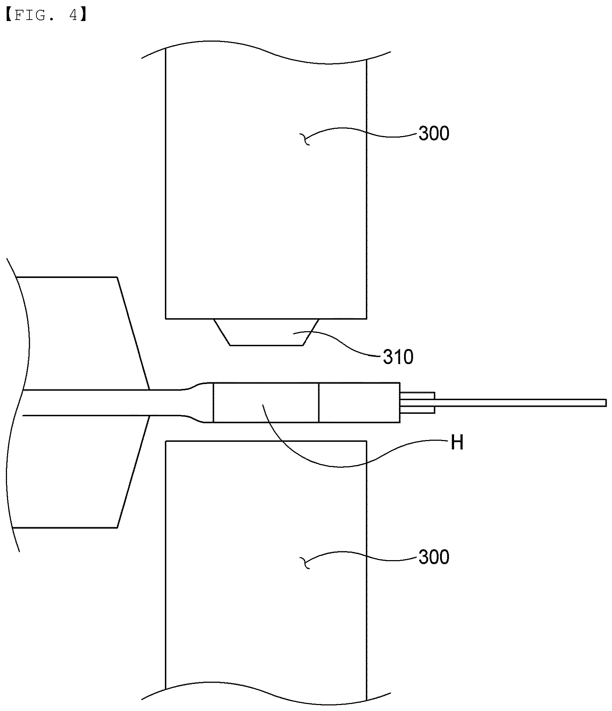

FIG. 2 is a perspective view showing a pouch battery cell sealing apparatus according to a first preferred embodiment of the present invention, FIG. 3 is a perspective view showing a part of a sealing tool in the pouch battery cell sealing apparatus according to the first preferred embodiment of the present invention, and FIG. 4 is a sectional view showing the sealing tool in the pouch battery cell sealing apparatus according to the first preferred embodiment of the present invention.

Referring to FIGs. 2 to 4, the pouch battery cell sealing apparatus according to the first preferred embodiment of the present invention includes a seating jig 100, a punching portion 200, and a sealing tool 300.

First, the seating jig 100, which is configured to allow a pouch battery cell C for sealing to be seated thereon, may be a workbench having a flat upper surface, and is not particularly limited as long as it is possible to support the pouch battery cell C seated thereon such that a sealing process can be performed.

Here, the pouch battery cell C includes an electrode assembly, a pouch case configured to receive the electrode assembly, an electrode lead having one side connected to an electrode tab of the electrode assembly and the other side protruding outwardly of the pouch case, and an insulating film located between a sealed portion of the pouch case and the electrode lead.

The electrode assembly is configured to have a structure in which positive electrodes and negative electrodes are alternately stacked a plurality of times in the state in which separators are interposed therebetween, and a pair of electrode leads constituted by a positive electrode lead and a negative electrode lead is exposed to the outside of the pouch case in a state of being electrically connected to positive tabs and negative tabs, respectively.

The positive electrode is manufactured by applying a positive electrode mixture including a positive electrode active material to a positive electrode current collector and drying the same, and the positive electrode mixture may optionally further include a binder, a conductive agent, or a filler, as needed.

In general, the positive electrode current collector may have a thickness of 3 to 500 µm. The positive electrode current collector is not particularly restricted as long as the positive electrode current collector exhibits high conductivity while the positive electrode current collector does not induce any chemical change in a battery to which the positive electrode current collector is applied. For example, the positive electrode current collector may be made of stainless steel, aluminum, nickel, titanium, or sintered carbon. Alternatively, the positive electrode current collector may be made of aluminum or stainless steel, the surface of which is treated with carbon, nickel, titanium, or silver. In addition, the positive electrode current collector may have a micro-scale uneven pattern formed on the surface thereof so as to increase adhesion of the positive electrode active material, or may be configured in any of various forms, such as a film, a sheet, a foil, a net, a porous body, a foam body, and a non-woven fabric body.

A layered compound, such as lithium cobalt oxide (LiCoO₂) or lithium nickel oxide (LiNiO₂), or a compound substituted with one or more transition metals; a lithium manganese oxide represented by the chemical formula Li₁₊ₓMn₂₋ₓO₄ (where x = 0 to 0.33) or a lithium manganese oxide, such as LiMnO₃, LiMn₂O₃, or LiMnO₂; lithium copper oxide (Li₂CuO₂); a vanadium oxide, such as LiV₃O₈, V₂O₅, or Cu₂V₂O₇; a Ni-sited lithium nickel oxide represented by the chemical formula LiNi₁₋ₓMₓO₂ (where M = Co, Mn, Al, Cu, Fe, Mg, B, or Ga, and x = 0.01 to 0.3); a lithium manganese composite oxide represented by the chemical formula LiMn₂₋ₓMₓO₂ (where M = Co, Ni, Fe, Cr, Zn, or Ta, and x = 0.01 to 0.1) or the chemical formula Li₂Mn₃MO₈ (where M = Fe, Co, Ni, Cu, or Zn); LiMn₂O₄ in which a part of Li in the chemical formula is replaced by alkaline earth metal ions; a disulfide compound; or Fe₂(MoO₄)₃ may be used as the positive electrode active material; however, the present invention is not limited thereto.

The negative electrode is manufactured by applying a negative electrode mixture including a negative electrode active material to a negative electrode current collector and drying the same, and the negative electrode mixture may further include a component, such as a conductive agent, a binder, or a filler, as needed.

The negative electrode current collector is generally manufactured so as to have a thickness of 3 to 500 µm. The negative electrode current collector is not particularly restricted as long as the negative electrode current collector exhibits high conductivity while the negative electrode current collector does not induce any chemical change in a battery to which the negative electrode current collector is applied. For example, the negative electrode current collector may be made of copper, stainless steel, aluminum, nickel, titanium, or sintered carbon. Alternatively, the negative electrode current collector may be made of copper or stainless steel, the surface of which is treated with carbon, nickel, titanium, or silver, or an aluminum-cadmium alloy. Furthermore, in the same manner as the positive electrode current collector, the negative electrode current collector may have a micro-scale uneven pattern formed on the surface thereof in order to increase adhesion of the negative electrode active material, or may be configured in any of various forms, such as a film, a sheet, a foil, a net, a porous body, a foam body, and a non-woven fabric body.

The separator prevents short circuit between the negative electrode and the positive electrode and allows only migration of lithium ions, and an insulating thin film having high ion permeability and mechanical strength is used as the separator. The pore diameter of the separator is typically 0.01 to 10 µm, and the thickness of the separator is typically 5 to 300 um. It is preferable for the separator to be made of any one selected from among polyethylene, polypropylene, a dual layer of polyethylene/polypropylene, a triple layer of polyethylene/polypropylene/polyethylene, a triple layer of polypropylene/polyethylene/polypropylene, and organic fiber filter paper; however, the present invention is not limited thereto.

Meanwhile, each of the negative electrode current collector and the positive electrode current collector includes a part to which a slurry including the active material is applied and an uncoated portion, which is a part to which no slurry mixture is applied, wherein the uncoated portion is cut to form an electrode tab, or a separate conductive member is connected to the uncoated portion by ultrasonic welding to form an electrode tab, and electrode tabs are gathered to form an electrode tab bundle.

The pouch case may be made of a laminate sheet including an inner covering layer, a metal layer, and an outer covering layer, and may be provided with a pocket portion configured to receive the electrode assembly and an edge portion extending outward from one side of the pocket portion by a certain length.

The inner covering layer is in direct contact with the electrode assembly, and therefore the inner covering layer must exhibit high insulation properties and high electrolytic resistance. In addition, the inner covering layer must exhibit high sealability in order to hermetically isolate the pouch case from the outside, i.e., a thermally-bonded sealed portion between inner layers must exhibit excellent thermal bonding strength.

The inner covering layer may be made of a material selected from among a polyolefin-based resin, such as polypropylene, polyethylene, polyethylene acrylic acid, or polybutylene, a polyurethane resin, and a polyimide resin, which exhibit excellent chemical resistance and high sealability; however, the present invention is not limited thereto, and polypropylene, which exhibits excellent mechanical properties, such as tensile strength, rigidity, surface hardness, and impact resistance, and excellent chemical resistance, is the most preferably used.

The metal layer, which abuts the inner covering layer, corresponds to a barrier layer configured to prevent moisture or various gases from permeating into the battery from the outside. An aluminum thin film, which is lightweight and easily shapeable, may be used as a preferred material for the metal layer.

The outer covering layer is provided on the other surface of the metal layer, and the outer covering layer may be made of a heat-resistant polymer that exhibits excellent tensile strength, resistance to moisture permeation, and resistance to air transmission such that the outer covering layer exhibits high heat resistance and chemical resistance while protecting the electrode assembly. As an example, the outer covering layer may be made of nylon or polyethylene terephthalate; however, the present invention is not limited thereto.

In general, the pair of electrode leads, which is constituted by the positive electrode lead and the negative electrode lead, is electrically connected respectively to the electrode tab bundles, more specifically a positive electrode tab bundle and a negative electrode tab bundle, by welding or the like, and is exposed to the outside of the pouch case.

The insulating film is located on an upper surface and a lower surface of the electrode lead, which overlap the sealed portion of the pouch case that is thermally fused, and is configured to prevent electricity generated by the electrode assembly from flowing to the pouch case via the electrode lead and to maintain the sealed state of the pouch case.

Here, it is preferable for the insulating film to be made of a non-conductive material, which does not conduct electricity well, and an insulating tape having a relatively small thickness while being easy to attach to the electrode lead is generally used.

Specifically, the insulating film may be made of at least one selected from the group consisting of polyimide (PI), polypropylene (PP), polyethylene (PE), polyethylene terephthalate (PET), and polyvinyl chloride (PVC: polyvinyl chloride), high density polyethylene (HDPE), and an epoxy resin, and is thermally fused and bonded to the inner resin layer of the pouch case through heat and pressure.

In the pouch battery cell, a guide hole H may be formed in each of the sealed portion, the electrode lead, and the insulating film by a punching portion 200, a description of which will follow.

In this case, the guide holes H formed in the sealed portion, the electrode lead, and the insulating film may be formed at the same position on a vertical extension line.

In addition, the guide hole H may be provided in two or more.

Next, the punching portion 200 is configured to form the guide hole H in each of the sealed portion of the pouch case, the electrode lead, and the insulating film. As an example, the punching portion is formed in a cylindrical shape, and forms the guide hole H by pressing and cutting at a predetermined position.

The punching portion 200 may be provided in the same number as guide holes H to be formed.

In this case, the punching portion 200 is movable in a horizontal direction and a vertical direction, and if the number of punching portions is less than the number of guide holes H to be formed, the punching portions 200 may form guide holes H on one side and then move to form guide holes H on the other side.

Here, two or more guide holes H are formed in the part where the sealed portion, the electrode lead, and the insulating film overlap each other, because if only one guide hole H is formed, position deviation, such as rotation around the one guide hole (H), may occur during subsequent position alignment.

In addition, the guide holes H formed in the sealed portion, the electrode lead, and the insulating film are formed at the same position on the vertical extension line such that the guide holes can be aligned at predetermined positions during position alignment.

The sealing tool 300 is configured to seal the sealed portion located at the edge of the pouch case by applying heat and pressure thereto, and may be provided in a pair so as to be located above and under the sealed portion to be sealed.

A guide protrusion 310 having a certain height is formed on at least one of the pair of sealing tools 300.

The guide protrusion 310 is inserted into the guide hole H to align the positions of the sealed portion, the electrode lead, and the insulating film in each of which the guide hole H is formed when pressed against the pouch case, is formed at a position corresponding to the guide hole H, and is formed in the same number as the guide holes H.

Since the guide protrusion 310 is inserted into the guide hole H, as described above, the horizontal sectional shape of the guide protrusion 310 may be identical to the horizontal sectional shape of the guide hole H.

In addition, the guide protrusion 310 may be shaped such that an upper part thereof has the same unit area as the guide hole H and the unit area decreases from the upper part to a lower part thereof that is closer to the guide hole H to facilitate insertion of the guide protrusion 310 into the guide hole H.

In this case, the height of the guide protrusion 310 is preferably formed so as to be no more than and at least half the sum of the heights of the guide holes H formed in the sealed portion, the electrode lead, and the insulating film. This is because, if the height of the guide protrusion 310 is greater than the sum of the heights of the guide holes H, the sealing tool 300 may not be closely pressed against the sealed portion by the guide protrusion 310, resulting in poor sealing, and if the height of the guide protrusion 310 is less than half of the sum of the heights of the guide holes H, the guide protrusion 310 may have an insufficient height, resulting in misalignment of the guide holes H.

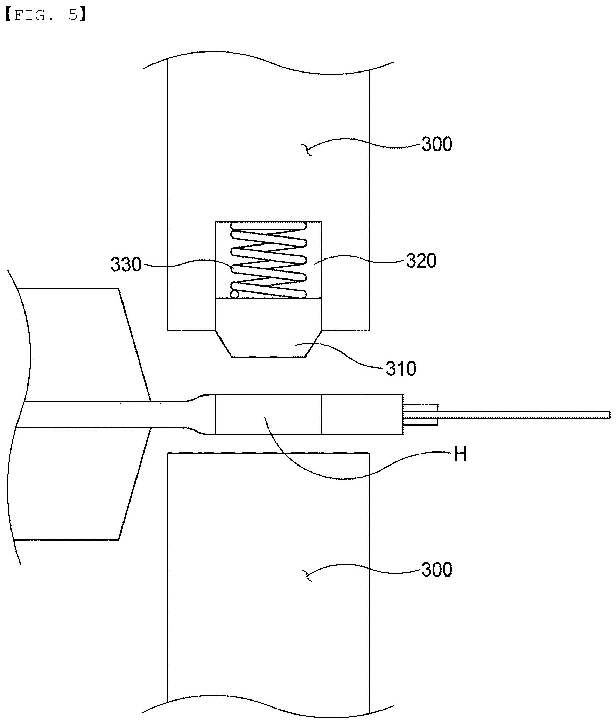

FIG. 5 is a sectional view showing a sealing tool in a pouch battery cell sealing apparatus according to a second preferred embodiment of the present invention.

Referring to FIG. 5, the pouch battery cell sealing apparatus according to the second preferred embodiment of the present invention is identical to the pouch battery cell sealing apparatus according to the first embodiment described with reference to FIGs. 2 to 4, except that a sealing tool 300 is further provided with a receiving portion 320 and an elastic member 330, and therefore a description of the same configuration will be omitted.

In the pouch battery cell sealing apparatus according to the second embodiment of the present invention, a sealing tool 300 includes a guide protrusion 310, a receiving portion 320, and an elastic member 330.

The guide protrusion 310 is configured to protrude from the surface of the sealing tool 300 that comes into tight contact with a sealed portion of a pouch case by a certain height.

The receiving portion 320 is a space configured to receive a part of the guide protrusion 310, and may be recessed inwardly from the surface of the sealing tool 300 that comes into tight contact with the sealed portion by a certain depth.

The receiving portion 320 is configured to receive the guide protrusion 310, as described above, and therefore the horizontal sectional shape thereof is formed so as to be identical to the horizontal sectional shape of the guide protrusion 310.

The elastic member 330 is provided in the receiving portion 320, and is made of an elastic material capable of contracting and extending.

If the distance between a pair of sealing tools 300 is less than the height of the guide protrusion 310 when the pair of sealing tools 300 comes into tight contact with the sealed portion in order to seal the sealed portion, a part of the guide protrusion 310 is received in the receiving portion 320, whereby the elastic member 330 contracts, and when the pair of sealing tools 300 is spaced apart from each other after sealing, the elastic member 330 extends to return the guide protrusion 310 to the original position thereof.

In this way, the elastic member 330 may contract and extend to prevent damage to the guide protrusion 310 due to pressure applied thereto when the pair of sealing tools 300 comes into tighter contact with the sealed portion than normally.

The elastic member 330 may be a spring that can easily contract and extend, or may be rubber or silicone provided in the receiving portion 320 by filling; however, the present invention is not limited thereto, and any material that can prevent damage to the guide protrusion 310 due to pressure exerted by operation of the sealing tool 300 may be used.

A pouch battery cell sealing method using the pouch battery cell sealing apparatus according to the preferred embodiment of the present invention includes a first step of seating a pouch battery cell on a seating jig, a second step of forming a guide hole in each of a sealed portion, an electrode lead, and an insulating film of a pouch battery cell, and a third step of sealing the sealed portion using a pair of sealing tools.

First, the first step of seating the pouch battery cell on the seating jig is a step of seating the pouch battery cell on an upper surface of the seating jig in order to seal the edge of a pouch case.

At this time, the pouch battery cell is seated on the upper surface of the seating jig such that a part thereof on a vertical extension line protrudes therefrom, and more specifically, the pouch battery cell is seated on the upper surface of the seating jig such that a sealed portion to be sealed protrudes from the upper surface of the seating jig in the horizontal direction.

The seating position of the pouch battery cell is provided to prevent the punching portion from penetrating the sealed portion, protruding downwardly of the sealed portion, and colliding with the seating jig in a process of forming a guide hole in the sealed portion and to allow the sealing tool to perform sealing in tight contact with a lower surface of the sealed portion.

The second step of forming the guide hole in each of the sealed portion, the electrode lead, and the insulating film of the pouch battery cell is a step of forming the guide hole in each of the sealed portion, the electrode lead, and the insulating film using the punching portion.

Here, before the third step, a process of adjusting the position of the sealing tool by moving the sealing tool such that the guide protrusion of the sealing tool is located at the same position on a vertical extension line as the guide hole formed in the second step may be further performed.

The third step of sealing the sealed portion using the pair of sealing tools is a step of applying heat and pressure to the sealed portion located at the edge of the pouch case to seal the sealed portion using the pair of sealing tools.

When the sealing tools come into tight contact with the sealed portion, guide protrusions provided on the sealing tools are inserted into the guide holes formed in the sealed portion, the electrode lead, and the insulating film, whereby sealing is performed in the state in which the positions of the sealed portion, the electrode lead, and the insulating film are aligned.

In addition, the present invention provides a battery cell manufactured by the pouch battery cell sealing method and a battery module, a battery pack, or a device including the battery cell.

Those skilled in the art to which the present invention pertains will appreciate that various applications and modifications are possible within the category of the present invention based on the above description.

### (Description of Reference Symbols)

- 100:: Seating jig
- 200:: Punching portion
- 300:: Sealing tool
- 310:: Guide protrusion
- 320:: Receiving portion
- 330:: Elastic member
- C:: Pouch battery cell
- H:: Guide hole

## Claims

1. A pouch battery cell sealing apparatus comprising:
a seating jig configured to receive a pouch battery cell having an electrode lead and an insulating film located in a sealed portion of a pouch case seated thereon;
a punching portion configured to form a guide hole in each of the sealed portion, the electrode lead, and the insulating film; and
a pair of sealing tools configured to seal the sealed portion, wherein
the sealing tool has a guide protrusion on a surface thereof configured to face the sealed portion of the pouch case.

2. The pouch battery cell sealing apparatus according to claim 1, wherein the guide hole formed by the punching portion is provided in two or more.

3. The pouch battery cell sealing apparatus according to claim 2, wherein each of the guide holes formed in the sealed portion, the electrode lead, and the insulating film are formed at the same position on a vertical extension line.

4. The pouch battery cell sealing apparatus according to claim 1, wherein the guide protrusion is formed at a position corresponding to the guide hole.

5. The pouch battery cell sealing apparatus according to claim 2, wherein a number of the guide protrusions is the same as a number of the guide holes.

6. The pouch battery cell sealing apparatus according to claim 1, wherein the guide protrusion is identical in a horizontal sectional shape to the guide hole.

7. The pouch battery cell sealing apparatus according to claim 6, wherein the guide protrusion is shaped so as to have a gradually decreasing unit area in a direction toward the guide hole.

8. The pouch battery cell sealing apparatus according to claim 1, wherein
the sealing tool has a receiving portion configured to receive the guide protrusion therein, and
the receiving portion has an elastic member having elasticity.

9. The pouch battery cell sealing apparatus according to claim 8, wherein the elastic member is a spring.

10. The pouch battery cell sealing apparatus according to claim 1, wherein a height of the guide protrusion is no more than and at least half a sum of heights of the guide holes formed in each of the sealed portion, the electrode lead, and the insulating film.

11. A pouch battery cell sealing method comprising:
forming a guide hole in each of a sealed portion, an electrode lead, and an insulating film of a pouch battery cell; and
sealing the sealed portion using a pair of sealing tools,
wherein during the step of sealing the sealed portion using the pair of sealing tools, a guide protrusion formed on each of the sealing tools is inserted into the guide hole.

12. The pouch battery cell sealing method according to claim 11, further comprising adjusting a position of each of the sealing tools such that the guide protrusion is located at the same position on a vertical extension line as the guide hole before the step of sealing the sealed portion using the pair of sealing tools.

13. A pouch battery cell comprising:
an electrode assembly;
a pouch case having the electrode assembly received therein, the pouch case having a sealed portion extending from an edge thereof by a certain length;
an electrode lead having one side connected to an electrode tab of the electrode assembly and the other side protruding outward from the pouch case; and
an insulating film located between the sealed portion and the electrode lead, wherein
a guide hole is formed in each of the sealed portion, the electrode lead, and the insulating film.

14. The pouch battery cell according to claim 13, wherein each of the guide holes formed in the sealed portion, the electrode lead, and the insulating film are formed at the same position on a vertical extension line.

15. The pouch battery cell according to claim 14, wherein the guide hole is provided in two or more.
